# EUROPÄISCHE PATENTANMELDUNG

(11) **EP 1 801 500 A2**
(43) Veröffentlichungstag der Anmeldung: **27.06.2007**
(21) Anmeldenummer: 06077112.8
(22) Anmeldetag: 27.11.2006
(51) Int. Cl.: F23M 13/00, F23R 3/06, F23J 15/06

(54) **Vorrichtung und Verfahren zur Dämpfung thermoakustischer Resonanzen in Brennkammern**

(30) Priorität: 02.12.2005 DE 102005059184
(71) Anmelder: DLR Deutsches Zentrum für Luft- und Raumfahrt e.V., 51147 Köln (DE)
(72) Erfinder: Forster, Stefan, 16761 Henningsdorf (DE); Michel, Ulf, 14193 Berlin (DE); Rôhle, Ingo, 10119 Berlin (DE)
(74) Vertreter: Patentanwälte Bressel und Partner

(57) **Zusammenfassung**

Vorrichtung zur Dämpfung thermoakustischer Resonanzen in Brennkammern, umfassend eine Brennkammer (2), wobei mindestens ein zumindest teilweise hohlzylindrisches, mit der Brennkammer (2) koaxiales Eindüselement (3) vorgesehen ist, welches eine Mehrzahl zueinander beabstandeter Düsenöffnungen (10, 10a, 10b, 10c) aufweist, und durch die Düsenöffnungen (10, 10a, 10b, 10c) ein Fluid zur Dissipation von während des Brennvorgangs auftretender Schwingungsenergie als Freistrahl (12) zumindest mit einer radialen Komponente in die Brennkammer (2) einströmt.

## Beschreibung

Die Erfindung betrifft eine Vorrichtung und ein Verfahren zur Dämpfung thermoakustischer Resonanzen in Brennkammern nach dem Oberbegriff der Ansprüche 1 und 15.

Es ist gemeinhin bekannt, dass Schallenergie mit Hilfe von Wirbelablösbewegungen an starren Oberflächen absorbierbar ist. So wird beispielsweise von D. W. Bechert beschrieben, wie mit Hilfe einer Strahlströmung Schallenergie absorbiert werden kann (D. W. Bechert, "Sound Absorption Caused By Vorticity Shedding, Demonstrated with a Jet Flow"; Journal of Sound and Vibration (1980) 70(3), S. 389-405). Dabei führt das Vorliegen einer instationären Ablösebedingung (Kutta-Bedingung) in einer Strömung am Rand einer starren Oberfläche zum Ablösen fluktuierender Wirbligkeiten, sofern die Strömung leicht instationär ist, d.h. wenn Schall vorhanden ist. Durch diesen Vorgang ist es möglich, Energie aus dem Schallfeld zu extrahieren.

Des Weiteren sind moderne auf dem Einsatz von Brennkammern beruhende Verbrennungssysteme, wie beispielsweise Gasturbinen oder Flugzeugtriebwerke, bekannt, die z.B. für niedrige Emissionen optimiert sind und daher nicht nur in ihrem jeweiligen Auslegungspunkt, sondern vorzugsweise über einen weiten Lastbereich, insbesondere auch im mageren Bereich des Verbrennungsvorgangs, stabil arbeiten sollen. Besonders Low-NOₓ-Brenner, die für eine niedrige Emission von Stickoxiden optimiert sind, sind an einigen von Geometrie und Belastung abhängigen Arbeitspunkten besonders anfällig für die Ausbildung von sehr starken Verbrennungsschwingungen, meist Stehwellenfelder, die durch einen Rückkopplungsmechanismus von Verbrennungsinstabilitäten mit akustischen Resonanzen verursacht werden. Jedoch auch bei anderen Brennkammertypen kann die Entstehung thermoakustischer Resonanzen zu Komplikationen führen. Aufgrund der hohen Wiederholraten der akustischen Zyklen kommt es dabei bei einer strömungs- oder verbrennungsinduzierten Anregung des Systems in der Nähe einer Eigenfrequenz der Brennkammer zu einer angeregten Resonanz in der Brennkammer. Charakteristisch für sich in räumlich begrenzten Brennkammern ausbildende Stehwellenfelder sind starke Druckschwankungsamplituden zum Beispiel am Brennkammerabschluss oder am Turbineneinlauf. Gängig sind dabei z.B. Arbeitsdrücke in der Brennkammer von ca. 30 bar, wobei z.B. Druckschwankungsamplituden von ca. 1 bar auftreten können. An diesen Orten größter Druckamplitude liegt auch die maximale Belastung der Brennkammerwand vor. Grund für das Auftreten der Stehwellen sind Impedanzunterschiede zwischen Brennkammerwand und dem für den Verbrennungsprozess verwendeten Fluid. Die Impedanz wird als Kenngröße des Schallwiderstands verwendet. Sie bezeichnet den Schallwiderstand und ergibt sich aus dem Quotient von Schalldruck und Schallschnelle. Typische Impedanzen liegen für die Gase in der Brennkammer bei beispielsweise 0,0004 Mrayl und für die Brennkammer selbst bei beispielsweise 46 Mrayl, was ein Verhältnis von ca. 1:113.000 ergibt. Damit liegt der Energieübertrag ohne Verformungen im Bereich von weit unter 1 ‰, d.h. die gesamte Schallenergie wird reflektiert, die Wände sind schallhart. Werden hierbei keinerlei konstruktive Maßnahmen zur Dämpfung bzw. zur Verringerung der Resonanzeffekte ergriffen, können die auftretenden akustischen Druckschwankungsamplituden in einer Größenordnung liegen, die zu einer irreversiblen Verformung des Gesamtsystems und im ungünstigsten Fall zur Zerstörung der Brennkammer führen kann.

Der vorliegenden Erfindung liegt daher das technische Problem zu Grunde, eine verbesserte Vorrichtung und ein verbessertes Verfahren zur Dämpfung thermoakustischer Resonanzen in Brennkammern zu schaffen.

Die Lösung des technischen Problems ergibt sich erfindungsgemäß durch die Gegenstände der Ansprüche 1 und 15. Weitere vorteilhafte Ausgestaltungen der Erfindung ergeben sich aus den Unteransprüchen.

Der Erfindung liegt dabei die Erkenntnis zu Grunde, dass durch seitliches, d.h. im Wesentlichen quer zur Hauptströmung gerichtetes Eindüsen eines Fluids, beispielsweise Luft, in Form von stationären Freistrahlen in eine Brennkammer Ringwirbel in Scherschichten erzeugt werden können, durch die akustische Energie absorbiert wird, und somit in der Brennkammer vorhandene bzw. entstehende Stehwellenfelder bei ausreichender Eindringtiefe der Freistrahlen günstig beeinflusst und Resonanzen unterdrückt werden können. Dies wird erfindungsgemäß gelöst, indem eine Vorrichtung und ein Verfahren zur Dämpfung thermoakustischer Resonanzen in Brennkammern vorgeschlagen wird, umfassend eine Brennkammer, wobei mindestens ein zumindest teilweise hohlzylindrisches, mit der Brennkammer koaxiales Eindüselement vorgesehen ist, welches eine Mehrzahl zueinander beabstandeter Düsenöffnungen aufweist, wobei durch die Düsenöffnungen ein Fluid zur Dissipation von während des Brennvorgangs auftretender Schwingungsenergie als Freistrahl zumindest mit einer radialen Komponente in die Brennkammer einströmt. Dabei ist unter einem Freistrahl ein Fluidstrom zu verstehen, der aus einer Öffnung, beispielsweise einer Düse mit dem Durchmesser dₒ, in eine freie Umgebung ohne Wandbegrenzung austritt.

Im vorliegenden Fall ist die "freie Umgebung" dabei der Innenraum der Brennkammer. Das aus der Düsenöffnung ausströmende Fluid und das Fluid der Umgebung haben dabei unterschiedliche Geschwindigkeiten. Zwischen ihnen entsteht eine Scherschicht, aus der sich der Freistrahl entwickelt. Das umgebende Fluid wird dabei angesaugt und mitgerissen. Bei der turbulenten Vermischung im Freistrahl bleibt der Strahlimpuls konstant. Infolge der Schleppwirkung nimmt der Volumenstrom des Strahles laufend zu, die kinetische Energie dagegen ab. Die turbulente Vermischung ist dabei mit Dissipation verbunden. Die in Form eines Freistrahls in das Verbrennungsgas eingedüste Luft kann aufgrund der erzeugten Ringwirbel auch als "Wirbelfilament" bezeichnet werden. Die durch eine Mehrzahl von vorzugsweise ringförmig angeordneten Düsenöffnungen in die Brennkammer strömenden Freistrahlen bilden somit eine Art "Wirbelfilamentvorhang", welcher vorzugsweise über den gesamten Brennkammerquerschnitt zu einer Dämpfung der durch den Verbrennungsvorgang entstehenden thermoakustischen Resonanzen führt. Im Idealfall können auf diese Weise thermoakustische Schwingungen vollständig unterdrückt werden. Die Resonanz fällt dann in sich zusammen und die Brennkammer brennt schwingungsarm. Bei dem eingedüsten Fluid handelt es sich vorzugsweise um Luft. Es ist jedoch auch vorstellbar, dass - beispielsweise bei stationären Turbinen - andere Medien, die nicht Bestandteil des Verbrennungsprozesses sind, z.B. Wasserdampf, verwendet werden können. Das hohlzylindrische Eindüselement ist dabei vorzugsweise als separates Ansatzelement, z.B. als Düsenring ausgebildet, was z.B. auch die Nach- oder Umrüstung existierender Brennkammern sowie den Austausch von Eindüselementen ermöglicht.

In einer vorteilhaften Ausführungsform weist die Brennkammer mindestens eine Kühleinrichtung auf, bei der durch Einströmen eines weiteren Fluids in die Brennkammer das Verbrennungsgas während und/oder nach dem Brennvorgang zumindest teilweise abkühlbar ist. Bei dem weiteren Fluid handelt es sich vorzugsweise um Luft. Konventionelle Brennkammern werden, ausgehend vom mageren Leerlaufzustand (bei einem Äquivalenzverhältnis Φ = 0,5 in der primären Verbrennungszone), bis hinein in den stöchiometrischen Betrieb (Äquivalenzverhältnis Φ = 1) unter Volllastbedingungen geregelt. Aus diesem Grunde stellt besonders die Bildung von Stickoxiden (NOₓ) unter Volllast ein großes Problem dar. Dabei wird die Bildung von thermischem NOₓ in erster Linie durch die Dissoziation des Luftsauerstoffs bei hohen Verbrennungstemperaturen (T > 1800 K) ausgelöst (Zeldovich-Mechanismus). Diese Kettenreaktion von Stickstoff-, Sauerstoff- und Hydroxylradikalen ist nur bei hohen Temperaturen und Drücken möglich und tritt verstärkt im Bereich des stöchiometrischen Verbrennungszustandes auf. Moderne schadstoffarme Verbrennungssysteme sind daher zur Reduzierung der Stickoxidbildung so konzipiert, dass der Verbrennungsvorgang zumindest teilweise in den mageren Bereich verschoben wird, in welchem die Verbrennung bei niedrigeren Temperaturen (ca. 1300 - 2000 K) als im stöchiometrischen Bereich stattfindet und es somit zu wesentlich geringerer NOₓ-Biidung kommt. Die Verschiebung des Verbrennungsvorgangs in den mageren Bereich kann dabei beispielsweise durch Einströmen zusätzlicher Luft in die Verbrennungszone erfolgen, wodurch das Äquivaienzverhäitnis Φ und somit auch die Verbrennungstemperatur deutlich reduziert werden und somit eine Kühlung erfolgt. Es ist jedoch des Weiteren auch vorstellbar, dass unabhängig von einem ggf. bereits vorliegenden mageren Brennstoff-Luft-Verhältnis die Kühlung der Brennkammerwand mittels Filmkühlung erfolgt. Dabei strömt Luft durch Öffnungen in den Seitenwänden mit verhältnismäßig geringer Eindringtiefe in die Brennkammer und bildet einen Luftfilm, der sich zur Kühlung der Brennkammerwand an diese anlegt, ohne jedoch Scherschichten auszubilden. Allgemein sind Verbrennungssysteme, die mit mageren Gemischen operieren, jedoch umso anfälliger gegenüber der Entstehung von Resonanzen bzw. der o.g. Stehwellenproblematik, so dass hier das erfindungsgemäße Verfahren und die erfindungsgemäße Vorrichtung besonders vorteilhaft eingesetzt werden können.

In einer weiteren vorteilhaften Ausführungsform sind das Fluid und das weitere Fluid dasselbe Fluid. Das bedeutet, dass das zur Kühlung verwendete weitere Fluid gleichzeitig auch zur Schwingungsdämpfung verwendet werden kann. Vorzugsweise kann dabei durch die erfindungsgemäße akustisch optimierte Auslegung der Brennkammer die ohnehin in der Brennkammer mittels des Fluids (beispielsweise Luft) stattfindende Kühlung genutzt und diese mit dem erfindungsgemäßen akustisch wirksamen dissipativen Prozess gekoppelt werden. Auf diese Weise kann die Betriebscharakteristik der Brennkammer durch Ausnutzung der akustischen Dämpfungseigenschaften der Kühllufteinblasung in effizienter Weise verbessert werden, indem die ohnehin vorhandene Kühleinrichtung z.B. hinsichtlich der Formgebung der durchströmten Löcher, deren Positionierung sowie des Einblasewinkels und der Einströmgeschwindigkeit des Fluids akustisch optimiert werden.

In einer weiteren vorteilhaften Ausführungsform ist die Kühleinrichtung als Einrichtung zur Quenchkühlung des Verbrennungsgases ausgebildet. Unter "Quenchkühlung" wird das Einblasen von Luft mit hoher Energie in den hinter der Flamme gelegenen Bereich der Brennkammer verstanden, wobei vorzugsweise eine rasche Umschaltung des Verbrennungsgemisches von einem fetten auf einen mageren Zustand erfolgt. Auf diese Weise erfolgt dann eine unmittelbare Abkühlung der Brenngase durch Änderung des Luftverhältnisses, da ein mageres Gemisch bei einer vergleichsweise niedrigeren Temperatur verbrennt, als ein stöchiometrisches bzw. fettes Gemisch. Dieses Vorgehen kann beispielsweise dazu genutzt werden, insbesondere bei Gasturbinen die Verbrennungsluft bzw. -gase direkt vor dem Eintritt in die Turbine bzw. andere nachgeschaltete Systeme zu kühlen. Dabei ist es insbesondere von Vorteil, wenn die zur Quenchkühlung vorgesehene Luft verwendet wird, um dem System erfindungsgemäß akustische Energie zu entziehen und auftretende Resonanzen zu dämpfen. Es ist zudem ebenso vorstellbar, dass die Quenchkühlung und der damit gekoppelte erfindungsgemäße akustisch wirksame Dissipationsprozess im Rahmen einer Brennkammer zum Einsatz kommt, die nach dem sog. RQL-Verfahren (RQL = Rich Burn - Quick Quench - Lean Burn) arbeitet. Eine RQL-Brennkammer oder auch Fett-Mager-Stufenbrennkammer wird zunächst in einer Primärstufe im fetten Betriebsbereich mit Brennstoffüberschuss betrieben, um eine stabile Verbrennung zu gewährleisten. Auf die fett operierende Primärstufe folgt eine sekundäre Verbrennungsstufe mit magerem Brennstoff-Luft-Verhältnis, um die un- und halbverbrannten Kohlenwasserstoffe aufzuoxidieren und den gewünschten Ausbrandgrad zu erzielen. Zwar sind dabei die Verbrennungstemperaturen in der Primärzone relativ hoch, der Sauerstoffmangel verhindert aber die träge Reaktion zwischen Luftsauerstoff und Stickstoff zu NOₓ. Zu berücksichtigen ist in diesem Zusammenhang jedoch, dass hinsichtlich der Kühlung der Flammrohrwand im Bereich der Primärzone und damit auch der akustischen Dämpfung beim RQL-Verfahren besondere Umstände zu beachten ist. Während eine Quenchkühlung lediglich für den Übergang zwischen Primär- und Sekundärzone vorgesehen ist, ist insbesondere eine Filmkühlung, die üblicherweise eingesetzt wird, in der Primärzone nicht möglich. Das Einbringen von Luft in der Primärzone würde zumindest lokal zu "Nestern" mit stöchiometrischer Verbrennung und hohen Temperaturen führen, was erhöhte Emissionswerte und im schlimmsten Fall die Zerstörung der Brennkammerwand zur Folge hätte. Daher wird für die Primärzone in der Regel eine Konfektionskühlung vorgesehen werden, während bei der Sekundärzone aufgrund der mageren Verbrennungsführung neben der Quenchkühlung auch Filmkühlung sowie eine erfindungsgemäße akustische Dämpfung zum Einsatz kommen kann.

In einer weiteren vorteilhaften Ausführungsform arbeitet die Brennkammer nach dem LPP-Prinzip mit einem mageren vorverdampften und vorvermischten Verbrennungsgemisch. Dieses Prinzip erfordert eine Vorverdampfungs- und Vorvermischungszone, die den Brennstoff sehr fein und homogen verteilt, bevor das magere Gemisch in die Primärzone gelangt. Eine solche LPP-Verbrennung (Lean-Premixed-Prevaporised) ist auf Grund des verwendeten mageren Gemischs in besonderem Maße empfindlich und anfällig für thermoakustische Resonanzbildung, weswegen hier eine erfindungsgemäße akustische Dämpfung besonders sinnvoll ist.

In einer weiteren vorteilhaften Ausführungsform weist das Eindüselement den gleichen Innendurchmesser wie die Brennkammer auf. Auf diese Weise kann gewährleistet werden, dass keine Querschnittsverengung zu einer Störung oder einem Abriss der Hauptströmung führt. Vorzugsweise ist die Innenseite des Eindüselement dabei als Substitut eines ausgesparten Abschnitts auf der Innenseite bzw. als Verlängerung der Innenwand der Brennkammer ausgebildet.

In einer weiteren vorteilhaften Ausführungsform ist das mindestens eine Eindüselement in axialer Richtung der Brennkammer im Bereich der Kraftstoffeindüsung und/oder im Bereich des Austritts des Verbrennungsgases angeordnet. Liegen in der Brennkammer Querschnittsverengungen vor, ist das Eindüselement vorzugsweise in Richtung der Hauptströmung davor anzuordnen. Diese Maßnahmen führen insgesamt zu verbesserten Dämpfungsergebnissen.

In einer weiteren vorteilhaften Ausführungsform beträgt der Winkel zwischen den Freistrahlen und der Brennkammerinnenwand in axialer Richtung zwischen 60° und 120°. Vorzugsweise beträgt der Durchmesser der Düsenöffnungen dabei weniger als 4 mm, weiter vorzugsweise ca. 2 mm. Die Länge einer Düse beträgt weiter vorzugsweise weniger als 4 mm. Diese konstruktiven Maßnahmen hinsichtlich der Eindüsgeometrie führen zu besonders guten Ergebnissen hinsichtlich der Reduzierung der Druckschwankungsamplituden. Dabei kann die Fläche einer Düsenöffnung prinzipiell beliebige Werte annehmen. Zur Reduzierung des eingeblasenen Massenstroms werden jedoch vorzugsweise möglichst kleine Werte der Düsenöffnung ausgewählt, um eine möglichst große Eindringtiefe des Freistrahls bzw. Wirbelfilaments zu erreichen. Die Ausformung der einzelnen Düsenöffnungen, d.h. der jeweiligen Strömungsabrisskante ist außerdem weiter vorzugsweise möglichst scharfkantig ausgebildet, was die Erzeugung von Ringwirbeln begünstigt und somit zu einer besseren Dämpfungswirkung beiträgt.

In einer weiteren vorteilhaften Ausführungsform sind die Düsenöffnungen in einer Lochreihe oder in einer Mehrzahl nebeneinander liegender Lochreihen angeordnet. Dabei sind die Lochreihen vorzugsweise als "Lochkreise" ausgebildet, d.h. die Düsenöffnungen einer Lochreihe bilden jeweils einen Ring, dessen Radien senkrecht zur Brennkammerlängsachse ausgerichtet sind. Das Eindüselement ist dabei selbst vorzugsweise ringförmig ausgebildet.

Es ist dabei vorstellbar, dass z.B. Eindüselemente mit einem Innendurchmesser von beispielsweise 500 mm erfindungsgemäß zur Dämpfung verwendet werden, welche vorzugsweise zwei Lochreihen mit je 60 Düsenöffnungen umfassen, die weiter vorzugsweise je 2 mm Innendurchmesser aufweisen, wobei alternativ dazu die zwei Lochreihen auch mit je 120 Düsenöffnungen, die weiter vorzugsweise je 3 mm Innendurchmesser aufweisen können, ausgebildet sein können. Alternativ dazu können bei Eindüselementen mit einem Innendurchmesser von beispielsweise 500 mm auch vier Lochreihen mit je 120 Düsenöffnungen, die vorzugsweise je 2 mm Innendurchmesser aufweisen, zum Einsatz kommen, um gute Dämpfungsergebnisse zu erzielen. Weiter vorzugsweise wird jedoch lediglich eine Lochreihe verwendet werden, da eine solche Anordnung in Versuchen die vergleichsweise besten Dämpfungseffekte zeitigte. Ist in dem Eindüselement eine Mehrzahl von Lochreihen vorgesehen, ist darauf zu achten, dass der axiale Abstand zwischen zwei benachbarten Lochreihen klein genug ist, damit das Eindüselement in Abhängigkeit der Wellenlänge der Resonanzschwingung als akustisch "kompakt" wirkt. D.h. der axiale Abstand d zwischen zwei benachbarten Lochreihen ist vorzugsweise wesentlich kleiner als die Wellenlänge λ des Resonanzschalls und ist somit eine Funktion der Brennkammerdimensionen, d.h. des vorhandenen Verhältnisses von Durchmesser und Länge der Brennkammer. Dabei beträgt der Abstand d weiter vorzugsweise weniger als 4 % des Durchmessers der Brennkammer und der Länge der Brennkammer. Bei einer Mehrzahl von Lochreihen ist hinsichtlich der maximalen Anzahl von Lochreihen bzw. der maximalen axialen Länge des Eindüselements zu beachten, dass sich bei zu großer Ausdehnung der wirksamen Einblasfläche die akustische Wirksamkeit verringert, da sich dann akustische Moden im Plenum des Eindüseelements, d.h. in dem von diesem umschlossenen Innenbereich, ausbilden können. Daher beträgt die axiale Länge des Eindüselements vorzugsweise weniger als 10% seines Durchmessers, weiter vorzugsweise weniger als 5%. Zudem beträgt die axiale Länge des Eindüselements vorzugsweise weniger als 10% der Länge der Brennkammer, weiter vorzugsweise weniger als 5%.

In einer weiteren vorteilhaften Ausführungsform sind die Düsenöffnungen nebeneinander liegender Lochreihen versetzt zueinander angeordnet. Auf diese Weise lassen sich negative Effekte, die auf einer gegenseitigen Beeinflussung der Freistrahlen bzw. Wirbelfilamente beruhen, weitestgehend reduzieren. Es ist jedoch auch vorstellbar, dass die Düsenöffnungen nebeneinander liegender Lochreihen zueinander in Reihe angeordnet sind.

In einer weiteren vorteilhaften Ausführungsform beträgt die Eindüsgeschwindigkeit des Fluids zwischen 9 m/s und 11 m/s. Dies führt bei den beschriebenen Eindüsgeometrien zu besonders guten Dämpfungsresultaten. Geschwindigkeiten, die wesentlich darunter liegen, führen hierbei zu einer vergleichsweise geringen Eindringtiefe der Freistrahlen, weswegen die Dämpfungswirkung nachlässt. Dabei ist jedoch auch zu beobachten, dass sich die Dämpfungswirkung jedoch nicht stetig mit zunehmender Eindüsgeschwindigkeit erhöht, sondern beispielsweise bei ca. 10 m/s ein lokales Optimum auftritt, weswegen die für die Freistrahlen zu wählende Eindüsgeschwindigkeit vorzugsweise in dieser Größenordnung liegt. Dabei wird als Berechnungsgrundlage für die Strömungsgeschwindigkeiten weiter vorzugsweise von einem "Propfenprofil", d.h. einem rechteckigen Strömungsprofil, ausgegangen.

In einer weiteren vorteilhaften Ausführungsform ist das Einströmen des Fluids durch die Düsenöffnungen zur Dissipation von Schwingungsenergie bedarfsweise beim Auftreten thermoakustischer Resonanzen zuschaltbar. Auf diese Weise lässt sich die erfindungsgemäße zusätzliche Dämpfung nur in den Fällen einsetzen, in denen unerwünschte Druckschwankungsamplituden auftreten. Das rechtzeitige Zuschalten kann dabei beispielsweise in Abhängigkeit der vorab bekannten Kenngrößen des Verbrennungsprozesses gesteuert werden oder mittels eines Regelkreislaufs beim messtechnischen Erfassen von auftretenden Resonanzen erfolgen. Es ist dabei auch vorstellbar, dass das erfindungsgemäße Eindüsen des Fluids mittels Freistrahlen pulsierend erfolgt, wobei die Pulsfrequenz sich in Abhängigkeit der Brennkammergeometrie bzw. der Gemischzusammensetzung bestimmt. Dies ermöglicht einen besonders flexiblen Einsatz des erfindungsgemäßen Dämpfungssystems, welcher zudem hilft, eine unerwünschte Verringerung des Wirkungsgrades des Verbrennungsprozesses zu vermeiden.

Die Erfindung wird nachfolgend anhand eines bevorzugten Ausführungsbeispiels näher erläutert. In den zugehörigen Zeichnungen zeigen
Fig. 1 eine schematische Darstellung einer erfindungsgemäßen Vorrichtung zur Dämpfung thermoakustischer Resonanzen im Längsschnitt,
Fig. 2 eine schematische Darstellung eines erfindungsgemäßen Eindüseelements im Querschnitt,
Fig. 3a, 3b, 3c eine schematische Darstellung drei verschiedener Ausführungsformen eines erfindungsgemäßen Eindüselements in der Seitenansicht und
Fig.4 ein Diagramm zur Darstellung der Dämpfungswirkung der erfindungsgemäßen Vorrichtung bzw. des erfindungsgemäßen Verfahrens.

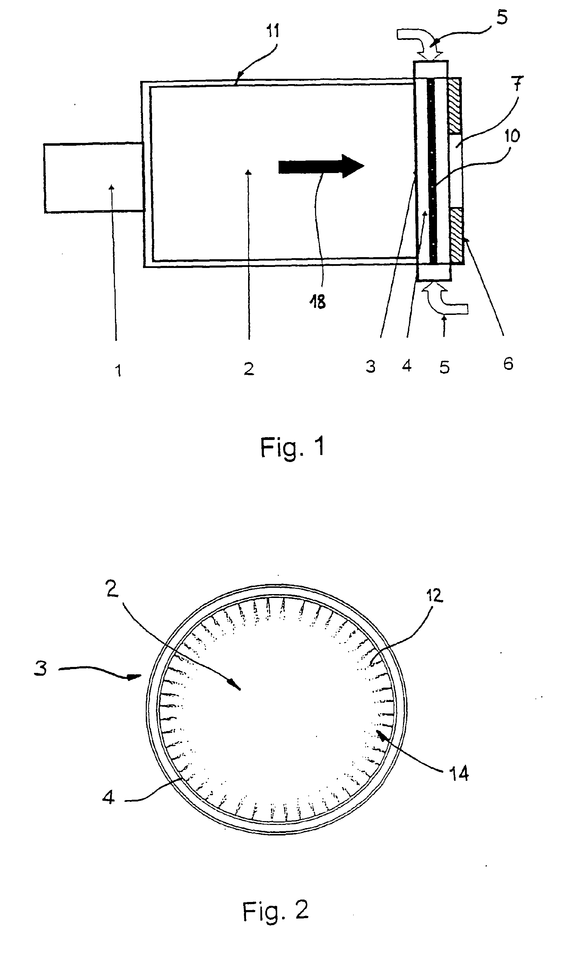

Fig. 1 zeigt schematisch eine erfindungsgemäße Vorrichtung zur Dämpfung thermoakustischer Resonanzen im Längsschnitt. Dabei ist eine Brennkammer 2 vorgesehen, die stromaufwärts mit einer Hauptluft- und Brennstoffzufuhr 1 ausgestattet ist und beispielsweise Bestandteil einer Gasturbinenanlage (nicht dargestellt) ist, sowie ein hohlzylindrisches, mit der Brennkammer 2 koaxiales Eindüselement 3. Das Eindüselement 3 umfasst eine Luftzufuhr 5 sowie einen Düsenring 4, welcher eine Mehrzahl zueinander beabstandeter Düsenöffnungen 10 aufweist. Durch die Düsenöffnungen 10 strömt während des Verbrennungsvorgangs ein Fluid, z.B. Luft, zur Dissipation von während des Brennvorgangs auftretender Schwingungsenergie als Freistrahl 12 (vgl. Fig. 2) zumindest mit einer radialen Komponente in die Brennkammer 2 ein, wobei der Einströmwinkel in die Brennkammer 2 zwischen den Freistrahlen 12 und der Brennkammerinnenwand 11 in axialer Richtung vorzugsweise zwischen 60 und 120 Grad beträgt. Durch das seitliche, d.h. im Wesentlichen quer zur Hauptströmung gerichtete Eindüsen der Luft in Form der stationären Freistrahlen 12 in die Brennkammer 2 werden Ringwirbel in Scherschichten erzeugt, durch die akustische Energie absorbiert wird, und somit in der Brennkammer 2 vorhandene bzw. entstehende Stehwellenfelder hinsichtlich der Reduktion von Druckamplituden günstig beeinflusst und Resonanzen unterdrückt werden. Die Freistrahlen 12 sind dabei als "Wirbelfilamente" ausgebildet und strömen durch die Mehrzahl von ringförmig angeordneten Düsenöffnungen 10 in die Brennkammer 3 und bilden dort eine Art "Wirbelfilamentvorhang" 14, wie in Fig. 2 dargestellt, welcher vorzugsweise über den gesamten Brennkammerquerschnitt zu einer Dämpfung der durch den Verbrennungsvorgang entstehenden thermoakustischen Resonanzen führt. Die Eindüsgeschwindigkeit der Luft durch die Düsenöffnungen 10 beträgt dabei zwischen 9 m/s und 11 m/s, vorzugsweise 10 m/s. Das hohlzylindrische Eindüselement 3 ist in axialer Richtung der Brennkammer 2 im Bereich des Austritts des Verbrennungsgases und in Hauptströmungsrichtung 18 vor einer den Brennerabschluss 6 bildenden Querschnittsverengung 7 angeordnet. Hinter der Querschnittsverengung 18 kann beispielsweise eine nachgeschaltete Turbine (nicht dargestellt) angeordnet sein, in die die Brenngase nach Verlassen der Brennkammer 2 eintreten. Das Eindüselement 3 ist dabei als separates Ansatzelement ausgebildet und weist den gleichen Innendurchmesser wie die Brennkammer 2 auf. Die Innenseite des Eindüselements 3 ist somit als Verlängerung der Brennkammerinnenwand 11 ausgebildet. Das erfindungsgemäße Eindüselement 3 dient gleichzeitig als Kühleinrichtung zur Kühlung der Verbrennungsgase nach dem Prinzip der Quenchkühlung, wie es insbesondere bei Gasturbinen genutzt wird, um die Verbrennungsluft bzw. -gase direkt vor dem Eintritt in die Turbine oder andere nachgeschaltete Systeme zu kühlen. Die zur Quenchkühlung vorgesehene Luft wird auf diese Weise außerdem dazu verwendet, um dem System erfindungsgemäß akustische Energie zu entziehen und auftretende Resonanzen zu dämpfen.

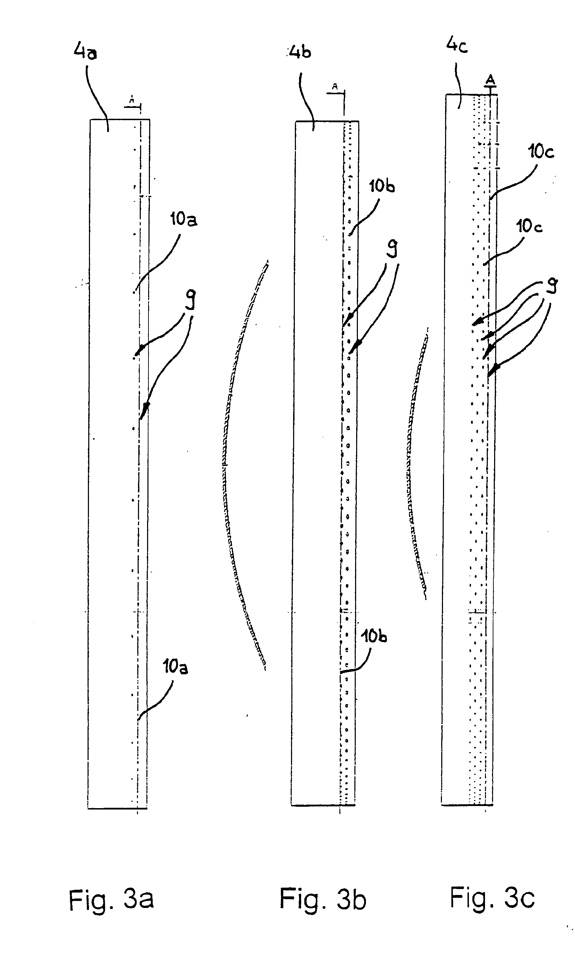

Fig. 3a, 3b und 3c zeigen schematisch drei verschiedene Ausführungsformen erfindungsgemäßer Düsenringe 4a, 4b, 4c in der Seitenansicht, bei welchen die Durchmesser der Düsenöffnungen 10a, 10b, 10c weniger als 4 mm und die Länge jeder Düse ebenfalls vorzugsweise weniger als 4 mm betragen. Die Ausformung der Strömungsabrisskante der einzelnen Düsenöffnungen 10a, 10b, 10c ist außerdem scharfkantig ausgebildet. Die Düsenöffnungen 10a, 10b, 10c sind in einer Mehrzahl als Lochkreise 9 ausgebildeten nebeneinander liegenden Lochreihen angeordnet, d.h. die Düsenöffnungen 10a, 10b, 10c eines Lochkreises 9 bilden jeweils einen Ring, dessen Radien senkrecht zur Brennkammerlängsachse bzw. zur Hauptströmungsrichtung 18 ausgerichtet sind. Die Düsenringe 4a, 4b, 4c selbst sind ringförmig ausgebildet. Zur Veranschaulichung ist hierzu in den Fig. 3a, 3b, 3c rechts neben der Darstellung der Seitenansichten der Düsenringe 4a, 4b, 4c jeweils ein Ringsegment als Querschnittsteilansicht entlang der Schnittkante A dargestellt. Fig. 3a zeigt einen Düsenring 4a mit einem Innendurchmesser von beispielsweise 500 mm, der erfindungsgemäß zur Dämpfung verwendet werden kann, wobei zwei Lochkreise 9 mit je sechzig Düsenöffnungen 10a vorgesehen sind, die je 2 mm Innendurchmesser aufweisen. Die Düsenöffnungen 10a innerhalb eines Lochkreises 9 sind in diesem Falle in einem umfangsseitigen Abstand von jeweils 6° zueinander angeordnet. Fig. 3b zeigt einen Düsenring 4b, der ebenfalls einen Innendurchmesser von 500 mm aufweist, wobei zwei Lochkreise 9 mit je hundertzwanzig Düsenöffnungen 10b vorgesehen sind, die je 3 mm Innendurchmesser aufweisen. Die Düsenöffnungen 10b innerhalb eines Lochkreises 9 sind in diesem Falle in einem umfangsseitigen Abstand von jeweils 3° zueinander angeordnet. Fig. 3c zeigt einen Düsenring 4c, welcher ebenfalls einen Innendurchmesser von 500 mm aufweist, wobei vier Lochkreise 9 mit je hundertzwanzig Düsenöffnungen 10c vorgesehen sind, die je 2 mm Innendurchmesser aufweisen. Auch hier sind die Düsenöffnungen 10c innerhalb eines Lochkreises 9 in einem umfangsseitigen Abstand von jeweils 3° zueinander angeordnet. Die Düsenöffnungen 10a, 10b, 10c von nebeneinander liegenden Lochkreisen 9 sind bei allen drei Ausführungsformen der Düsenringe 4a, 4b, 4c jeweils versetzt zueinander angeordnet. Beim Düsenring 4a sind dabei die Düsenöffnungen 10a der beiden Lochkreise 9 um beispielsweise 3° gegeneinander versetzt. Bei den Düsenringen 4b und 4c beträgt der Versatz zwischen den Düsenöffnungen zweier benachbarter Lochkreise beispielsweise 1,5°. Außerdem betragen die Abstände benachbarter Lochkreise 9 in axialer Richtung bei allen drei Düsenringen 4a, 4b, 4c beispielsweise 7 mm, vorzugsweise etwa das Dreifache des Durchmessers der Düsenöffnungen 10a, 10b, 10c.

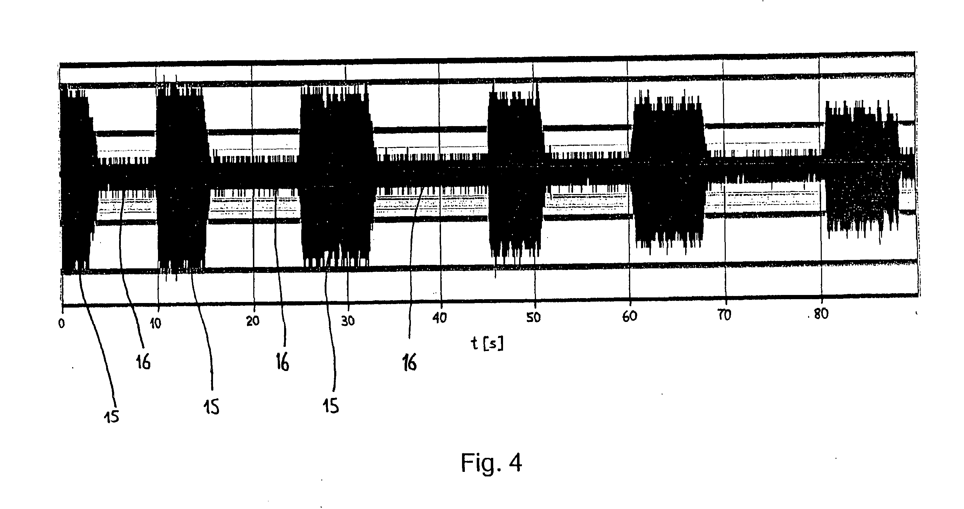

Fig. 4 zeigt ein Diagramm zur Darstellung der Dämpfungswirkung der erfindungsgemäßen Vorrichtung bzw. des erfindungsgemäßen Verfahrens, wobei die Eindüsung von Luft zur Unterdrückung resonanter Brennkammerschwingungen zyklisch erfolgt. Dabei ist gemäß einem Versuchsablauf die Druckentwicklung in Pascal (d.h. die Entwicklung des akustischen Felds) in der Brennkammer 2 (vgl. Fig. 1) über der Zeit in Sekunden aufgetragen, wobei die Bereiche mit hohen Druckschwankungsamplituden Resonanzen 15 darstellen. Dabei ist die Wirksamkeit des Wirbelfilamentvorhangs 14 (s. Fig. 2) für die sich in Resonanz befindliche Brennkammer 2 zu erkennen. Beginnend mit dem schwingenden Zustand wird dabei die eingedüste Luftmenge über den Düsenring 4 (s. Fig. 1) gesteigert, bis die Schwingung in der Brennkammer 2 vollständig unterdrückt wird, die Resonanz 15 in sich zusammenfällt und die Brennkammer 2 sich im schwingungsarmen Zustand 16 befindet. Durch Reduzierung der eingedüsten Luftmenge fällt die Brennkammer 2 dann sofort wieder in den schwingenden Zustand zurück, wobei innerhalb der in Fig. 4 dargestellten neunzig Sekunden diese Prozedur entsprechend fünfmal wiederholt wird. Das Brennstoff-Luft-Verhältnis bleibt dabei jeweils unverändert.

### Bezugszeichenliste

- 1: Hauptluft- und Brennstoffzufuhr
- 2: Brennkammer
- 3: Eindüselement
- 4, 4a, 4b, 4c: Düsenring
- 5: Luftzufuhr
- 6: Brennerabschluss
- 7: Querschnittsverengung
- 9: Lochkreis
- 10, 10a, 10b, 10c: Düsenöffnung
- 11: Brennkammerinnnenwand
- 12: Freistrahl
- 14: Wirbelfilamentvorhang
- 15: Resonanz
- 16: schwingungsarmer Zustand
- 18: Hauptströmungsrichtung

## Patentansprüche

1. Vorrichtung zur Dämpfung thermoakustischer Resonanzen in Brennkammern, umfassend eine Brennkammer (2), wobei mindestens ein zumindest teilweise hohlzylindrisches, mit der Brennkammer (2) koaxiales Eindüselement (3) vorgesehen ist, welches eine Mehrzahl zueinander beabstandeter Düsenöffnungen (10, 10a, 10b, 10c) aufweist,
**dadurch gekennzeichnet, dass**
durch die Düsenöffnungen (10, 10a, 10b, 10c) ein Fluid zur Dissipation von während des Brennvorgangs auftretender Schwingungsenergie als Freistrahl (12) zumindest mit einer radialen Komponente in die Brennkammer (2) einströmt.

2. Vorrichtung nach Anspruch 1, **dadurch gekennzeichnet, dass** die Brennkammer (2) mindestens eine Kühleinrichtung aufweist, bei der durch Einströmen eines weiteren Fluids in die Brennkammer (2) das Verbrennungsgas während und/oder nach dem Brennvorgang zumindest teilweise abkühlbar ist.

3. Vorrichtung nach Anspruch 2, **dadurch gekennzeichnet, dass** das Fluid und das weitere Fluid dasselbe Fluid sind.

4. Vorrichtung nach einem der Ansprüche 2 oder 3, **dadurch gekennzeichnet, dass** die Kühleinrichtung als Einrichtung zur Quenchkühlung des Verbrennungsgases ausgebildet ist.

5. Vorrichtung nach einem der Ansprüche 1 oder 2, **dadurch gekennzeichnet, dass** die Brennkammer (2) nach dem LPP-Prinzip mit einem mageren vorverdampften und vorvermischten Verbrennungsgemisch arbeitet.

6. Vorrichtung nach einem der genannten Ansprüche, **dadurch gekennzeichnet, dass** das Eindüselement (3) den gleichen Innendurchmesser wie die Brennkammer (2) aufweist.

7. Vorrichtung nach einem der genannten Ansprüche, **dadurch gekennzeichnet, dass** das mindestens eine Eindüselement (3) in axialer Richtung der Brennkammer (2) im Bereich der Kraftstoffeindüsung und/oder im Bereich des Austritts des Verbrennungsgases angeordnet ist.

8. Vorrichtung nach einem der genannten Ansprüche, **dadurch gekennzeichnet, dass** der Winkel zwischen den Freistrahlen (12) und der Brennkammerinnenwand (11) in axialer Richtung zwischen 60° und 120° beträgt.

9. Vorrichtung nach einem der genannten Ansprüche, **dadurch gekennzeichnet, dass** der Durchmesser der Düsenöffnungen (10, 10a, 10b, 10c) weniger als 4 mm beträgt.

10. Vorrichtung nach einem der genannten Ansprüche, **dadurch gekennzeichnet, dass** die Strömungsabrisskante der Düsenöffnungen (10, 10a, 10b, 10c) scharfkantig ausgebildet ist.

11. Vorrichtung nach einem der genannten Ansprüche, **dadurch gekennzeichnet, dass** die Düsenöffnungen (10, 10a, 10b, 10c) in einer Lochreihe oder in einer Mehrzahl nebeneinander liegender Lochreihen angeordnet sind.

12. Vorrichtung nach Anspruch 11, **dadurch gekennzeichnet, dass** die Düsenöffnungen (10, 10a, 10b, 10c) nebeneinander liegender Lochreihen versetzt zueinander angeordnet sind.

13. Vorrichtung nach einem der genannten Ansprüche, **dadurch gekennzeichnet, dass** die Eindüsgeschwindigkeit des Fluids zwischen 9 m/s und 11 m/s beträgt.

14. Vorrichtung nach einem der genannten Ansprüche, **dadurch gekennzeichnet, dass** das Einströmen des Fluids durch die Düsenöffnungen (10, 10a, 10b, 10c) zur Dissipation von Schwingungsenergie bedarfsweise beim Auftreten thermoakustischer Resonanzen zuschaltbar ist.

15. Verfahren zur Dämpfung thermoakustischer Resonanzen in Brennkammern, umfassend eine Brennkammer (2), wobei mindestens ein zumindest teilweise hohlzylindrisches, mit der Brennkammer (2) koaxiales Eindüselement (3) vorgesehen ist, welches eine Mehrzahl zueinander beabstandeter Düsenöffnungen (10, 10a, 10b, 10c) aufweist,
**dadurch gekennzeichnet, dass**
durch die Düsenöffnungen (10, 10a, 10b, 10c) ein Fluid zur Dissipation von während des Brennvorgangs auftretender Schwingungsenergie als Freistrahl (12) zumindest mit einer radialen Komponente in die Brennkammer (2) einströmt.

16. Verfahren nach Anspruch 15, **dadurch gekennzeichnet, dass** die Brennkammer (2) mindestens eine Kühleinrichtung aufweist, bei der durch Einströmen eines weiteren Fluids in die Brennkammer (2) das Verbrennungsgas während und/oder nach dem Brennvorgang zumindest teilweise abgekühlt wird.

17. Verfahren nach Anspruch 16, **dadurch gekennzeichnet, dass** das Fluid und das weitere Fluid dasselbe Fluid sind.

18. Verfahren nach einem der Ansprüche 16 oder 17, **dadurch gekennzeichnet, dass** die Kühleinrichtung als Einrichtung zur Quenchkühlung des Verbrennungsgases ausgebildet ist.

19. Vorrichtung nach einem der Ansprüche 15 oder 16, **dadurch gekennzeichnet, dass** die Brennkammer (2) nach dem LPP-Prinzip mit einem mageren vorverdampften und vorvermischten Verbrennungsgemisch arbeitet.

20. Verfahren nach einem der Ansprüche 15 bis 19, **dadurch gekennzeichnet, dass** das Eindüselement (3) den gleichen Innendurchmesser wie die Brennkammer (2) aufweist.

21. Verfahren nach einem der Ansprüche 15 bis 20, **dadurch gekennzeichnet, dass** das mindestens eine Eindüselement (3) in axialer Richtung der Brennkammer (2) im Bereich der Kraftstoffeindüsung und/oder im Bereich des Austritts des Verbrennungsgases angeordnet ist.

22. Verfahren nach einem der Ansprüche 15 bis 21, **dadurch gekennzeichnet, dass** der Winkel zwischen den Freistrahlen (12) und der Brennkammerinnenwand (11) in axialer Richtung zwischen 60° und 120° beträgt.

23. Verfahren nach einem der Ansprüche 15 bis 22, **dadurch gekennzeichnet, dass** der Durchmesser der Düsenöffnungen (10, 10a, 10b, 10c) weniger als 4 mm beträgt.

24. Verfahren nach einem der Ansprüche 15 bis 23, **dadurch gekennzeichnet, dass** die Strömungsabrisskante der Düsenöffnungen (10, 10a, 10b, 10c) scharfkantig ausgebildet ist.

25. Verfahren nach einem der Ansprüche 15 bis 24, **dadurch gekennzeichnet, dass** die Düsenöffnungen (10, 10a, 10b, 10c) in einer Lochreihe oder in einer Mehrzahl nebeneinander liegender Lochreihen angeordnet sind.

26. Verfahren nach Anspruch 25, **dadurch gekennzeichnet, dass** die Düsenöffnungen (10, 10a, 10b, 10c) nebeneinander liegender Lochreihen versetzt zueinander angeordnet sind.

27. Verfahren nach einem der Ansprüche 15 bis 26, **dadurch gekennzeichnet, dass** die Eindüsgeschwindigkeit des Fluids zwischen 9 m/s und 11 m/s beträgt.

28. Verfahren nach einem der Ansprüche 15 bis 27, **dadurch gekennzeichnet, dass** das Einströmen des Fluids durch die Düsenöffnungen (10, 10a, 10b, 10c) zur Dissipation von Schwingungsenergie bedarfsweise beim Auftreten thermoakustischer Resonanzen zugeschaltet wird.
